# NEUE EUROPÄISCHE PATENTSCHRIFT

(11) **EP 1 493 321 B2**
(45) Veröffentlichungstag und Bekanntmachung des Hinweises auf die Entscheidung über den Einspruch: **18.05.2011**
(45) Hinweis auf die Patenterteilung: 01.08.2007
(21) Anmeldenummer: 04014297.8
(22) Anmeldetag: 18.06.2004
(51) Int. Cl.: A01D 78/10

(54) **Heuwerbungsmaschine**
Haymaking machine
Machine de fenaison

(30) Priorität: 20.06.2003 DE 10327901
(43) Veröffentlichungstag der Anmeldung: 05.01.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)
(74) Vertreter: Busse & Busse

(56) Entgegenhaltungen:
- EP-A- 1 095 555
- EP-A- 1 433 372
- DE-C- 19 716 379

## Beschreibung

Die Erfindung bezieht sich auf eine Heuwerbungsmaschine, insbesondere zum Schwaden von landwirtschaftlichem Halmgut mit vier umlaufend angetriebenen, über Stützräder auf dem Erdboden abstützbaren sowie über Ausleger aus einer Arbeits- und Betriebsstellung in eine verschwenkte Transportstellung überführbaren Kreiselrechen in in Fahrtrichtung im wesentlichen V-förmiger Anordnung.

Eine Heuwerbungsmaschine der vorgenannten Art ist beispielsweise aus der DE 197 16 379 C1 bekannt. Bei dieser Maschine sind vier Kreiselrechen vorgesehen, wobei jeweils zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Zur Überführung in ihre Transportstellung sind die jeweiligen Kreiselrechen einwärts zu verschwenken. Die maximal mögliche Arbeitsbreite ist bei dieser Heuwerbungsmaschine gegenüber einer Heuwerbungsmaschine mit lediglich zwei Kreiselrechen deutlich erhöht, wird jedoch dem Wunsch nach noch größeren Arbeitsbreiten noch nicht gerecht, obgleich in der Transportstellung der Teile die Grenzen einer maximalen Transporthöhe schon erreicht sind.

Die EP 1 433 372 A1 zeigt eine Heuwerbungsmaschine, insbesondere zum Schwaden von landwirtschaftlichem Halmgut mit vier umlaufend angetriebenen und über Stützräder auf dem Erdboden abstützbaren, sowie über Ausleger aus einer Arbeits- und Betriebsstellung in eine verschwenkte Transportstellung überführbaren Kreiselrechen, die in der Arbeits- und Betriebsstellung in Fahrtrichtung im wesentlichen V-förmig ausgerichtet sind und denen in der Arbeits- und Betriebsstellung in Fahrtrichtung zumindest zwei weitere, die maximale Arbeitsbreite bestimmende Kreiselrechen vorgeordnet sind. Hierbei handelt es sich allerdings um ein Dokument nach Artikel 54(3) EPÜ.

Es ist daher Aufgabe der vorliegenden Erfindung, eine Heuwerbungsmaschine der eingangs genannten Art zu schaffen, mit der die wirksame Gesamtarbeitsbreite noch weiter zu erhöhen ist, bei der aber gleichwohl auch bei Kurvenfahrten noch ein sauberes Heuwerbungsergebnis, insbesondere auch ein exaktes Schwadlegen von Halmgut möglich ist.

Zur Lösung dieser Aufgabe zeichnet sich die Heuwerbungsmaschine durch die im Patentanspruch 1 angegebenen Merkmale aus. Des weiteren kann vorgesehen sein, dass das kürzeste Abstandsmaß C zwischen einem weiteren Kreiselrechen und dem benachbarten Kreiselrechen 10 % bis 50 % des Durchmessers D des weiteren Kreiselrechens beträgt.

Damit ist eine Heuwerbungsmaschine zur Verfügung gestellt, bei der die wirksame Gesamtarbeitsbreite noch weiter erhöht ist, so dass Arbeitsbreiten von z. B. 20 Metern durchaus realisierbar sind. Um bei solch großen Arbeitsbreiten auch noch ein befriedigendes Heuwerbungsergebnis zu erzielen, sind die weiteren Kreiselrechen derart vorgesehen, dass - je nachdem, welche der vorgesehenen Maschinenachsen gelenkt oder ungelenkt ist - das jeweilige Abstandsmaß der Vertikallängsmittelachsen der beiden in Maschinenfahrtrichtung jeweils benachbarten Kreiselrechen, die entweder der ungelenkten Achse vor- oder der ungelenkten Achse nachgeordnet sind, geringer ist als das Abstandsmaß der Vertikallängsmittelachsen der anderen in Fahrtrichtung benachbarten Kreiselrechen. Ist in Maschinenfahrtrichtung ein Kreiselrechenpaar einer ungelenkten Maschinenachse nachgeordnet und die beiden anderen Kreiselrechenpaare dieser ungelenkten Maschinenachse vorgeordnet, so ist das Abstandsmaß der Vertikallängsmittelachsen dieser beiden in Maschinenfahrtrichtung der ungelenkten Maschinenachse vorgeordneten Kreiselrechen geringer als das Abstandsmaß der beiden anderen Kreiselrechen. Damit ist die Lage der Kreiselrechen zum Momentanpol der Maschine unter Berücksichtigung der Lenklaufeigenschaften derart vorgesehen, dass aufgrund der damit einhergehenden Überdeckungs- bzw. Überlappungsbereiche der wirksamen Bearbeitungsbereiche der Kreiselrechen auch bei Kurvenfahrten ein wirksames und sauberes Heuwerbungsergebnis zu erzielen ist. Dieses vorteilhafte Heuwerbungsergebnis ist auch zu erzielen, wenn der weitere Kreiselrechen in Abhängigkeit seines Durchmessers soweit an den nachgeordneten Kreiselrechen heranreicht, dass das kürzeste Abstandsmaß 0,1 bis 0,5 des Durchmessers des weiteren Kreiselrechens beträgt.

Die erfindungsgemäße Heuwerbungsmaschine ist bevorzugtermassen als selbstfahrende Heuwerbungsmaschine mit einer eigenen Fahrerkabine und einem eigenen motorischen Antrieb ausgebildet, wobei die beiden äußeren und damit die beiden weiteren Kreiselrechen der Fahrerkabine unmittelbar vor- oder nebengeordnet sind. Dabei sind die beiden weiteren Kreiselrechen - bezogen auf die Anbindung ihres jeweiligen Auslegers - am Maschinenrahmen in Fahrtrichtung nach hinten versetzt, so dass sie in etwa neben der Fahrerkabine liegen und somit in Sichtweite des Fahrers arbeiten können, ohne dass dieser besondere aufwendige Bewegungen durchführen muss. Vorzugsweise ist die selbstfahrende Maschine mit einer vorderen gelenkten Maschinenachse versehen, so dass das Abstandsmaß der Vertikallängsmittelachsen der jeweiligen in Fahrtrichtung benachbarten Kreiselrechen der beiden in Fahrtrichtung vorderen Kreiselrechenpaare geringer ist, als das Abstandsmaß der Vertikallängsmittelachsen der jeweiligen Kreiselrechen des mittleren Kreiselrechenpaares und des in Fahrtrichtung hinteren Kreiselrechenpaares.

Alternativ kann die erfindungsgemäße Heuwerbungsmaschine aber auch als gezogene Heuwerbungsmaschine ausgebildet sein mit zweckmäßigerweise einer ungelenkten Maschinenachse zwischen dem mittleren Kreiselrechenpaar und dem in Fahrtrichtung hinteren Kreiselrechenpaar, wobei sich bezüglich des Abstandsmaßes der Vertikallängsmittelachsen der Kreiselrechen der beiden in Fahrtrichtung vorderen Kreiselrechenpaare Analoges ergibt wie bei der zuvor beschriebenen selbstfahrenden Heuwerbungsmaschine.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: eine Vorderansicht einer als selbstfahrenden Maschine ausgebildeten Heuwerbungsmaschine nach der Erfindung;
- Fig. 2: eine schematische Draufsicht auf die Heuwerbungsmaschine nach Fig. 1;
- Fig. 3: eine Seitenansicht der Heuwerbungsmaschine nach den Fig. 1 und 2 in der Arbeitsstellung der Maschine;
- Fig. 4: eine Seitenansicht der Maschine nach den Ansprüchen 1 und 3 in der Transportstellung der Teile;
- Fig. 5: eine Vorderansicht der Maschine nach Fig. 1 in der Transportstellung der Teile;
- Fig. 6: ein alternatives Ausführungsbeispiel einer als gezogene Maschine ausgebildeten Heuwerbungsmaschine in Draufsicht in der Arbeitsstellung der Teile;
- Fig. 7: eine Draufsicht auf das Ausführungsbeispiel nach Fig. 6 mit einwärts verschwenkten Kreiselrechen;
- Fig. 8: eine Draufsicht aus das Ausführungsbeispiel nach Fig. 6 in der Transportstellung der Teile

In der Zeichnung sind allgemein gleichwirkende Teile mit übereinstimmenden Bezugszeichen beziffert.

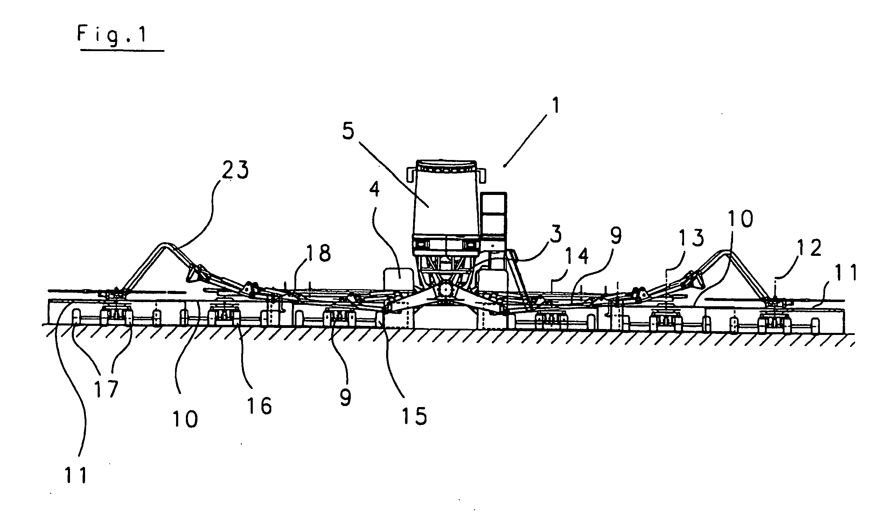

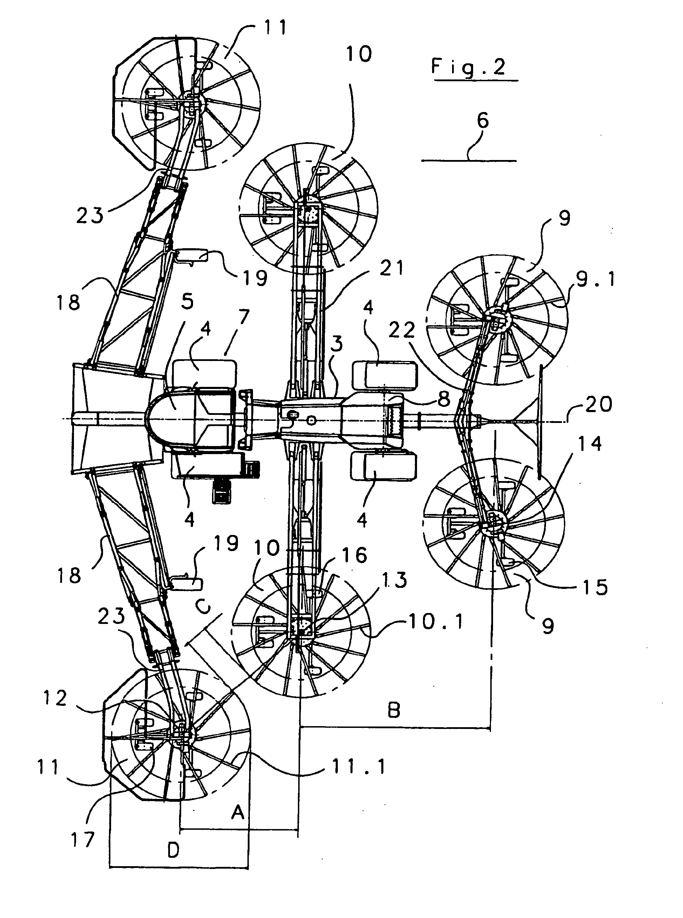

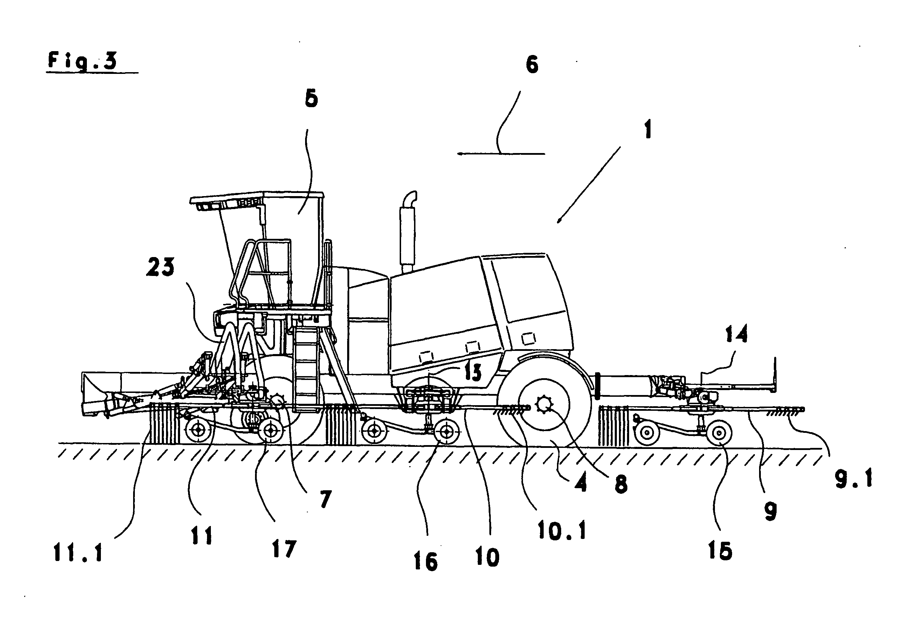

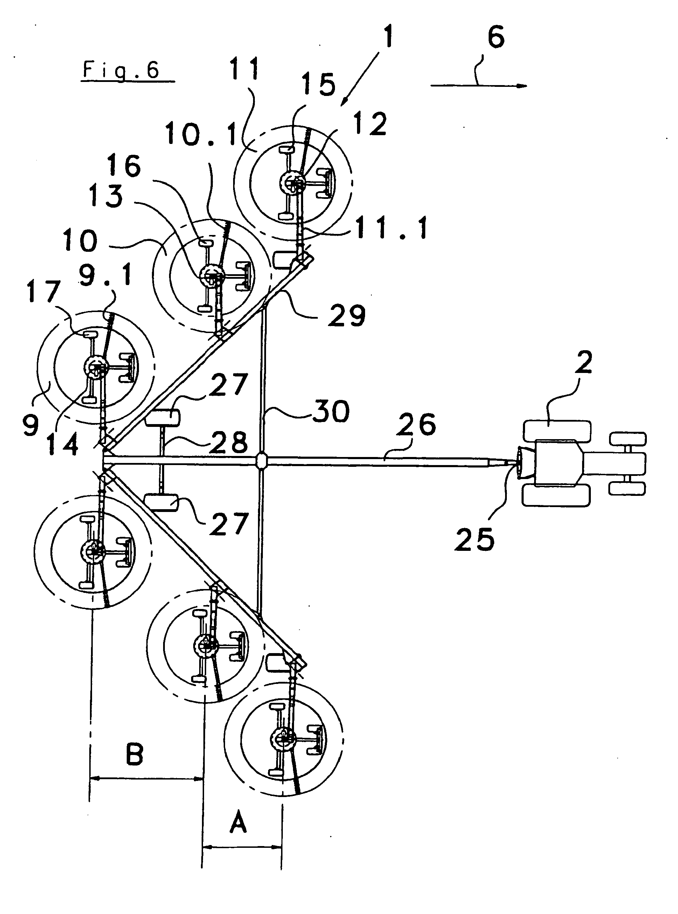

In der Zeichnung ist allgemein mit 1 eine Heuwerbungsmaschine beziffert, die in den Ausführungsbeispielen nach den Fig. 1 bis 5 als selbstfahrende Heuwerbungsmaschine und in den Ausführungsbeispielen nach den Fig. 6 bis 8 als von einem landwirtschaftlichen Schlepper 2 gezogene Heuwerbungsmaschine ausgebildet ist. Die in den Fig. 1 bis 5 gezeigte selbstfahrende Heuwerbungsmaschine hat ein Fahrzeugschassis 3, Laufräder 4 sowie eine Fahrerkabine 5 und - was im einzelnen näher aus der Darstellung nach Fig. 2 hervorgeht - eine Arbeitsfahrtrichtung 6. In dem gezeigten Ausführungsbeispiel sind die in Fahrtrichtung 6 vorderen Laufräder 4 an einer gelenkten Maschinenachse 7 und die in Fahrtrichtung hinteren Laufräder 4 an einer ungelenkten Maschinenachse 8 angeordnet. In in Fahrtrichtung 6 V-förmiger Anordnung sind hintere Kreiselrechen 9 und diesen Kreiselrechen 9 in Fahrtrichtung vorgeordnete Kreiselrechen 10 vorgesehen. Um die Arbeitsbreite der Heuwerbungsmaschine noch weiter zu vergrößern, sind in Fahrtrichtung 6 den Kreiselrechen 10 zwei weitere Kreiselrechen 11 vorgeordnet, so dass sich insgesamt eine Maschine mit insgesamt drei Kreiselrechenpaaren mit sechs Kreiselrechen 9, 10, 11 ergibt.

Um trotz dieser enormen Arbeitsbreite auch bei Kurvenfahren ein optimales Schwadergebnis zu erreichen, sind die Kreiselrechen 9, 10, 11 konstruktiv in besonderer Weise aufeinander abgestimmt bzw. einander angepasst. So sind die in Fahrtrichtung vordersten und mithin weiteren Kreiselrechen 11 mit einem in Fahrtrichtung 6 nach hinten versetzten Abstandsmaß in der Arbeits- und Betriebsstellung vorgesehen, so dass der Abstand A der vertikalen Längsmittelachse 12 des vorderen weiteren Kreisels 11 zur vertikalen Längsmittelachse 13 des in Fahrtrichtung benachbarten Kreiselrechens 10 geringer ist als das Abstandsmaß der vertikalen Längsmittelachse 13 dieses Kreiselrechens 10 zu der vertikalen Längsmittelachse 14 von dem in Fahrtrichtung nachgeordneten Kreiselrechen 9. Das Abstandsmaß zwischen den vertikalen Längsmittelachsen 13 und 14 dieser beiden benachbarten Kreiselrechen 10 und 9 ist mit B bezeichnet. Diese Abstandsmaße beziehen sich eine Heuwerbungsmaschine mit der gezeigten Anordnung von gelenkter und ungelenkter Maschinenachse. Ist die gelenkte Maschinenachse in dem Ausführungsbeispiel nach den Fig. 1 bis 5 jedoch die Maschinenachse, die in Fahrtrichtung hinten gelegen, so dass die in Fahrtrichtung 6 vordere Achse eine ungelenkte Achse ist, wäre das Abstandsmaß B kleiner als das Abstandsmaß A. Bei Einhaltung dieser Parameter ist bei einer Heuwerbungsmaschine mit sechs Kreiselrechen und der enormen Arbeitsbreite ein optimales Schwadergebnis auch bei Kurvenfahrten zu erreichen. Das bedeutet, dass immer einer ausreichende Überdeckung zwischen den jeweils benachbarten Kreiselrechen vorhanden ist und somit auch bei einer Kurvenfahrt keine unbearbeiteten Feldstreifen liegen bleiben. Zusätzlich ist der Kreiselrechen 11 so an den nachgeordneten Kreiselrechen 10 herangereicht, dass das kürzeste Abstandsmaß 0,1 bis 0,5 des Durchmessers D des weiteren Kreiselrechen ist.

Die Kreiselrechen 9, 10, und 11 sind ihrerseits auf Stützrädern 15, 16 und 17 in der Arbeitsstellung auf dem Erdboden abstützbar. Der Ausleger 18 der jeweiligen weiteren (vorderen) Kreisel 11 ist über weitere Laufräder 19 in der Arbeitsstellung auf dem Erdboden abstützbar.

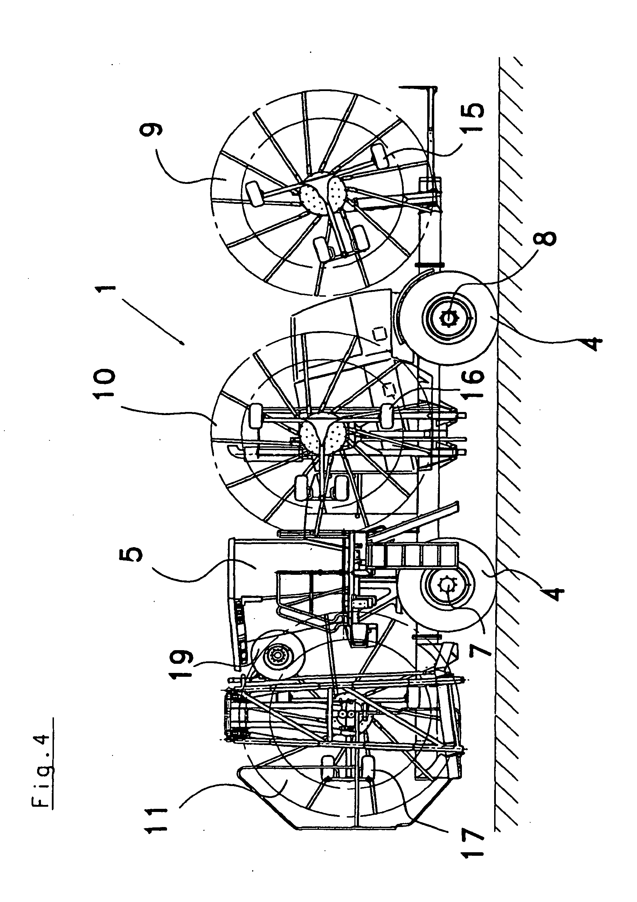

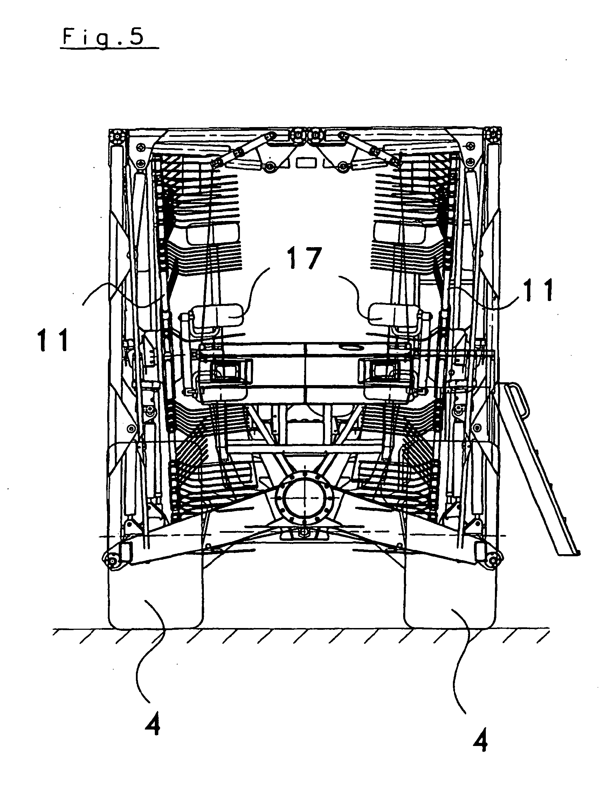

Wie insbesondere aus der Zeichnung nach der Fig. 2 hervorgeht, sind diese Ausleger 18 derart an der Maschine angelenkt, dass diese unter einem spitzen Winkel zur Maschinenlängsachse 20 in der Arbeitsstellung weisen. Dieser Ausleger 18, wie auch die Ausleger 21 und 22 der anderen Kreisel 9 und 10 sind schwenkbar am Maschinenchassis 3 angelenkt und können in die aus Fig. 4 und Fig. 5 ersichtliche hochgeklappte und einwärts verschwenkte Transportstellung überführt werden. Dazu besteht der vordere Ausleger aus zwei Teilen und hat jeweils einen Endstützarm 23, der eine abgewinkelte domartige Gestalt hat (siehe Fig. 1), so dass er relativ zu dem anderen Bereich des Auslegers 18 einwärts zu verschwenken ist mit dem Vorteil, dass der Kreiselrechen 12 in der Transportstellung noch in den durch die domartige Gestaltung vorgesehenen inneren Einschwenkbereich weiter verschwenkt werden kann.

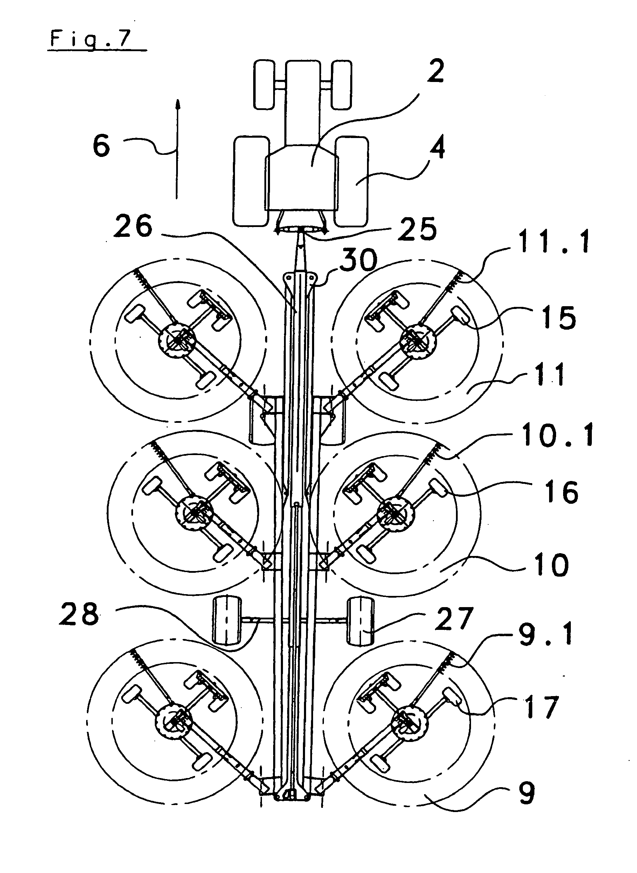

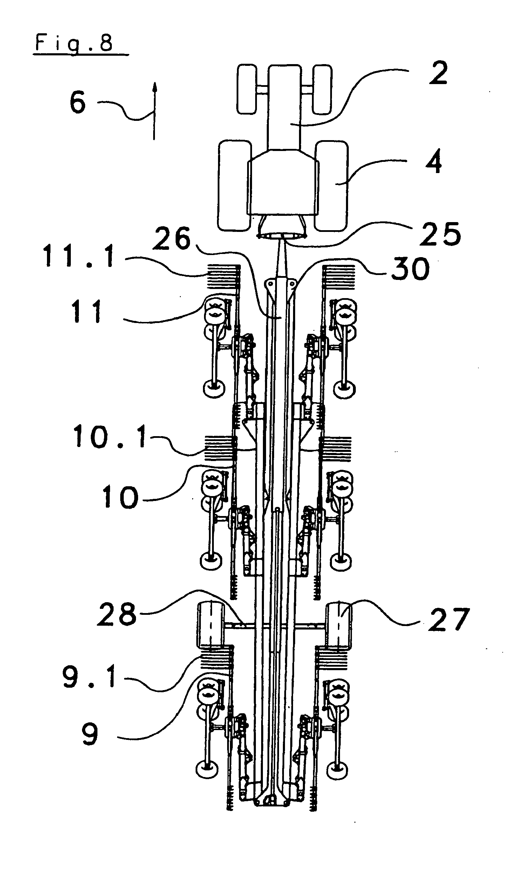

In dem Ausführungsbeispiel nach den Fig. 6 bis 8 ist die Heuwerbungsmaschine als eine, von einem landwirtschaftlichen Schlepper 2 gezogene Maschine ausgebildet. Sie ist dort an die übliche Dreipunkthydraulik 25 des Schleppers 2 anzubinden über einen Maschinenrahmen 26, der über Laufräder 27 einer ungelenkten Maschinenachse 28 auf dem Erdboden abstützbar ist. Die mit 9,10 und 11 bezifferten Kreiselrechen sind wiederum über Laufräder 15, 16 und 17 auf dem Erdboden abstützbar und haben Rechzinken 11.1, 10.1 und 9.1, die jeweils um die vertikalen Längsmittelachsen 12, 13 und 14 rotieren. Auch hier ist das Abstandsmaß der jeweiligen Längsmittelachsen 12 und 13 der beiden in Arbeitsrichtung 6 der ungelenkten Achse 28 vorgeordneten Kreiselrechen 10 und 11 geringer als das Abstandsmaß B der Vertikallängsmittelachsen 13 und 14 der beiden anderen Kreiselrechen 9 und 10. Die Kreiselrechen ihrerseits sind an einwärts und auswärts schwenkbar gehaltenen Auslegern 29 abgestützt, die an dem Tragrahmen 26 befestigt sind. Über diese Ausleger 29 und bewegliche an dem Maschinenrahmen verschwenkbare Stellmittel 30 können die Ausleger 29 mit samt den Kreiselrechen einwärts verschwenkt werden, wie dies Fig. 7 zeigt. Aus dieser einwärts verschwenkten Stellung sind die Kreiselrechen hoch zuschwenken in eine Transportstellung mit nach außen weisenden Rechzinken 11.1, 10.1 und 9.1, wie dies Fig. 8 veranschaulicht. Daraus ist zu sehen, dass die Transportbreite der Heuwerbungsmaschine nur geringfügig größer ist als die Breite des landwirtschaftlichen Schleppers.

Es ist selbstverständlich, dass die aus Vorstehendem ersichtliche Erfindung nicht nur bei Heuwerbungsmaschinen, sondern auch bei solchen Maschinen mit anderes rotierenden Werkzeugen Anwendung finden kann, wo es auf die Lage des Momentanpoles und zum Beispiel eine saubere Erntegutablage ankommt. So können beispielsweise auch Mähmaschinen mit rotierenden Mähwerken in analoger Anordnung der Mähwerke wie die Kreiselrechen mit entsprechenden Abständen vorgesehen sein.

## Patentansprüche

1. Heuwerbungsmaschine (1), insbesondere zum Schwaden von landwirtschaftlichem Halmgut, mit vier umlaufend angetriebenen und über Stützräder (15, 16) auf dem Erdboden abstützbaren sowie über Ausleger (21, 22) aus einer Arbeits- und Betriebsstellung in eine verschwenkte Transportstellung überführbare Kreiselrechen (9, 10), die in der Arbeits- und Betriebsstellung in Fahrtrichtung (6) im wesentlichen V-förmig ausgerichtet sind, **dadurch gekennzeichnet, dass** den Kreiselrechen (9, 10) in der Arbeits- und Betriebsstellung in Fahrtrichtung zumindest zwei weitere, die maximale Arbeitsbreite bestimmende Kreiselrechen (11) vorgeordnet sind, wobei ein Abstandsmaß (A) der Vertikallängsmittelachsen (12, 13) von zwei in Fahrtrichtung (6) hintereinander angeordneten sowie einer ungelenkten, mit Laufrädern (4) versehenen Maschinenachse (8) vorgeordneten Kreiselrechen (10, 11) kleiner oder gleich einem Abstandsmaß (B) der Vertikallängsmittelachsen (13, 14) der zwei in Fahrtrichtung (6) benachbart angeordneten, der ungelenkten Maschinenachse (8) vor- bzw. nachgeordneten Kreiselrechen (9, 10) ist und wobei das Abstandsmaß (A) 40 % bis 100 % des Abstandesmaßes (B) beträgt.

2. Heuwerbungsmaschine nach Anspruch 1, **dadurch gekennzeichnet, dass** das kürzeste Abstandsmaß C zwischen einem der weiteren Kreiselrechen (11) und dem benachbarten Kreiselrechen (10) 10 % bis 50 % des Durchmessers D des weiteren Kreiselrechens (11) beträgt.

3. Heuwerbungsmaschine nach einem der Ansprüche 1 bis 3, **dadurch gekennzeichnet, dass** die beiden weiteren Kreiselrechen (11) einer gelenkten Maschinenachse (7) in Fahrtrichtung (6) vorgeordnet sind.

4. Heuwerbungsmaschine nach einem der Ansprüche 1 bis 4, **dadurch gekennzeichnet, dass** die Heuwerbungsmaschine (1) als selbstfahrende Heuwerbungsmaschine ausgebildet ist.

5. Heuwerbungsmaschine nach einem der Ansprüche 1 bis 5, **dadurch gekennzeichnet, dass** die beiden weiteren Kreiselrechen (11) über Ausleger (18) abstützbar sind, die sich gegenüber dem Erdboden über Laufräder (19) abstützen.

6. Heuwerbungsmaschine nach einem der Ansprüche 1 bis 6, **dadurch gekennzeichnet, dass** die beiden weiteren Kreiselrechen (11) an Auslegern (18) abstützbar sind, die in der Arbeits- und Betriebsstellung unter einem spitzen Winkel zur Maschinenlängsmittelachse (20) ausgerichtet sind.

7. Heuwerbungsmaschine nach einem der Ansprüche 1 bis 7, **dadurch gekennzeichnet, dass** die beiden weiteren Kreiselrechen (11) jeweils über einen zwei- oder mehrgeteilten Ausleger (18) abstützbar sind mit einem Endstützarm (23), der relativ zum anderen Auslegerbereich verschwenkbar ist.

8. Heuwerbungsmaschine nach Anspruch 1 oder 3, **dadurch gekennzeichnet, dass** an jeder Maschinenseite in Fahrtrichtung (6) hintereinander angeordnete Kreiselrechen (9, 10, 11) jeweils an einem Ausleger (29) abstützbar sind, die jeweils einen spitzen Winkel zur Maschinenlängsmittelachse (20) in der Arbeits- und Betriebsstellung einnehmen und einwärts verschwenkbar sind.

9. Heuwerbungsmaschine nach einem der Ansprüche 1 bis 8, **dadurch gekennzeichnet, dass** sich bei der Ausbildung der Heuwerbungsmaschine (1) als selbstfahrende Heuwerbungsmaschine ein Kreiselrechenpaar hinter einer ungelenkten Achse (8), ein weiteres Kreiselrechenpaar zwischen der ungelenkten Maschinenachse (8) und der gelenkten Maschinenachse (7) und die beiden weiteren Kreiselrechen (11) vor der gelenkten Maschinenachse (7) befinden.

10. Heuwerbungsmaschine nach einem der Ansprüche 1 bis 8, **dadurch gekennzeichnet, dass** bei der Ausbildung der Heuwerbungsmaschine (1) als selbstfahrende Heuwerbungsmaschine ein Kreiselrechenpaar in Fahrtrichtung hinter der gelenkten Maschinenachse (7), ein Kreiselrechenpaar zwischen der gelenkten (7) und der ungelenkten Maschinenachse (8) und die beiden weiteren Kreiselrechen (11) vor der ungelenkten Maschinenachse (8) angeordnet sind.

11. Heuwerbungsmaschine nach Anspruch 11, **dadurch gekennzeichnet, dass** das Abstandsmaß der Vertikallängsmittelachsen (14) der hinter der ungelenkten Maschinenachse (8) vorgesehenen Kreiselrechen (9) in der Arbeits- und Betriebsstellung kleiner ist als das Abstandsmaß der Vertikallängsmittelachsen der in Fahrtrichtung (6) benachbarten, vor der gelenkten Maschinenachse (7) angeordneten Kreiselrechen (11).

## Claims

1. Haymaking machine (1), particularly for windrowing stalked agricultural crops, having four rotary rakes (9, 10) which are driven in rotation, which are able to be supported on the ground by means of supporting wheels (15, 16), which are able to be transferred by means of booms (21, 22) from a working and operating position to a pivoted position for transport and which, in the working and operating position, are aligned substantially in a vee shape in the direction of travel (6), **characterised in that**, in the working and operating position, the rotary rakes (9, 10) have positioned in front of them in the direction of travel at least two further rotary rakes (11) which determine the maximum working width, a spacing (A) between the vertical longitudinal centre axes (12, 13) of two rotary rakes (10, 11) which are positioned one behind the other in the direction of travel (6) and which are positioned in front of an unsteered axle (8) of the machine which is provided with wheels (4) for travel being equal to or less than a spacing (B) between the vertical longitudinal centre axes (13, 14) of the two rotary rakes (9, 10) which are adjacent in the direction of travel (6) and which are arranged respectively behind and in front of the unsteered axle (8) of the machine, and the spacing (A) being 40% to 100% of the spacing (B).

2. Haymaking machine according to claim 1, **characterised in that** the shortest spacing C between one of the further rotary rakes (11) and the adjacent rotary rake (10) is 10% to 50% of the diameter D of the further rotary rake (11).

3. Haymaking machine according to one of claims 1 to 3, **characterised in that** the two further rotary rakes (11) are positioned in front of a steered axle (7) of the machine in the direction of travel (6).

4. Haymaking machine according to one of claims 1 to 4, **characterised in that** the haymaking machine (1) is in the form of a self-propelled haymaking machine.

5. Haymaking machine according to one of claims 1 to 5, **characterised in that** the two further rotary rakes (11) are able to be supported by means of booms (18) which are supported in relation to the ground by means of wheels for travel (19).

6. Haymaking machine according to one of claims 1 to 6, **characterised in that** the two further rotary rakes (11) are able to be supported on booms (18) which, in the working and operating position, are aligned at an acute angle to the longitudinal centre axis (20) of the machine.

7. Haymaking machine according to one of claims 1 to 7, **characterised in that** the two further rotary rakes (11) can be supported by means of respective booms (18) divided into two or more parts having an end supporting arm (23) which is pivotable relative to the other region of the boom.

8. Haymaking machine according to claim 1 or 3, **characterised in that**, on each side of the machine, rotary rakes (9, 10, 11) which are arranged one behind the other in the direction of travel (6) are able to be supported on respective booms (29) which each make an acute angle with the longitudinal centre axis (20) of the machine in the working and operating position and which are able to be pivoted inwards.

9. Haymaking machine according to one of claims 1 to 8, **characterised in that**, when the haymaking machine (1) is in the form of a self-propelled haymaking machine, one pair of rotary rakes is situated behind an unsteered axle (8), a further pair of rotary rakes is situated between the unsteered axle (8) of the machine and the steered axle (7) of the machine, and the two further rotary rakes (11) are situated in front of the steered axle (7) of the machine.

10. Haymaking machine according to one of claims 1 to 8, **characterised in that**, when the haymaking machine (1) is in the form of a self-propelled haymaking machine, one pair of rotary rakes is arranged behind the steered axle (7) of the machine in the direction of travel, one pair of rotary rakes is arranged between the steered axle (7) of the machine and the unsteered axle (8), and the two further rotary rakes (11) are situated in front of the unsteered axle (8) of the machine.

11. Haymaking machine according to claim 11, **characterised in that** the spacing between the vertical longitudinal centre axes (14) of the rotary rakes (9) provided behind the unsteered axle (8) of the machine is smaller in the working and operating position than the spacing between the vertical longitudinal centre axes of the rotary rakes (11) which are adjacent in the direction of the travel (6) and are arranged in front of the steered axle (7) of the machine.

## Revendications

1. Machine de fenaison (1), notamment pour andainer des produits agricoles en tiges, comportant quatre rotors râteleurs (9, 10) entraînés en rotation et s'appuyant sur le sol par des roues de sustentation (15, 16) et qui, disposés principalement en forme de V en position de travail et de fonctionnement, dans la direction de marche (6) peuvent être basculés par des flèches (21, 22), de la position de travail et de fonctionnement, dans une position de transport,
**caractérisée en ce qu'**
en position de travail et de fonctionnement, les rotors râteleurs (9, 10) sont précédés dans la direction de déplacement par au moins deux autres rotors râteleurs (11) déterminant la largeur maximale de travail,
la distance (A) des axes médians longitudinaux verticaux (12, 13) de deux rotors râteleurs (10) l'un derrière l'autre dans la direction de déplacement (6) et des rotors racleurs (10, 11) installés en amont d'un essieu non directeur (8) équipé de roues de roulement (4), est inférieure ou égale à la distance (B) des axes médians longitudinaux verticaux (13, 14) des deux rotors râteleurs (9, 10) voisins dans la direction de déplacement (6), en amont et en aval de l'essieu non directeur (8) de la machine et la distance (A) représente entre 40 % et 100 % de la distance (B).

2. Machine de fenaison (1), selon la revendication 1,
**caractérisée en ce que**
la plus courte distance (C) entre l'un des autres rotors râteleurs (11) et le rotor râteleur voisin (10) représente entre 10 et 50 % du diamètre (D) de l'autre rotor râteleur (11).

3. Machine de fenaison selon l'une des revendications 1 à 2,
**caractérisée en ce que**
les deux autres rotors râteleurs (11) précèdent l'essieu directeur (7) de la machine dans la direction de déplacement (6).

4. Machine de fenaison selon l'une des revendications 1 à 3,
**caractérisée en ce que**
la machine de fenaison (1) est une machine automotrice.

5. Machine de fenaison selon l'une des revendications 1 à 4,
**caractérisée en ce que**
les deux autres rotors râteleurs (11) s'appuient par des flèches (18) elles-mêmes appuyées au sol par des roues de roulement (19).

6. Machine de fenaison selon l'une des revendications 1 à 5,
**caractérisée en ce que**
les deux autres rotors râteleurs (11) s'appuient sur des bras (18) faisant un angle aigu par rapport à l'axe médian longitudinal de la machine (20) en position de travail et de fonctionnement.

7. Machine de fenaison selon l'une des revendications 1 à 6,
**caractérisée en ce que**
les deux autres rotors râteleurs (11) s'appuient chaque fois par une flèche (18) en deux ou plusieurs parties, avec un bras d'appui d'extrémité (23) qui peut basculer par rapport à l'autre partie de la flèche.

8. Machine de fenaison selon l'une des revendications 1 ou 2,
**caractérisée en ce que**
chaque côté de la machine comporte des rotors râteleurs (9, 10, 11) l'un derrière l'autre dans la direction de déplacement (6) et soutenus chacun par une flèche (29) faisant un angle aigu par rapport à l'axe longitudinal médian de la machine (20) en position de travail et de fonctionnement et qui peuvent basculer vers l'intérieur.

9. Machine de fenaison selon l'une des revendications 1 à 7,
**caractérisée en ce que**
la machine de fenaison (1) est une machine automotrice avec une paire de rotors râteleurs derrière l'essieu non directeur (8), l'autre paire de rotors râteleurs entre l'essieu non directeur (8) et l'essieu directeur (7), et les deux autres rotors râteleurs (11) étant devant l'essieu directeur (7) de la machine.

10. Machine de fenaison selon l'une des revendications 1 à 7,
**caractérisée en ce que**
la machine de fenaison (1), en forme de machine automotrice, comporte une paire de rotors râteleurs derrière l'essieu directeur (7) de la machine, une paire de rotors râteleurs entre l'essieu directeur (7) et l'essieu non directeur (8), et les deux autres rotors râteleurs (11) se trouvent en amont de l'essieu non directeur (8), toujours pris dans le sens de déplacement de la machine.

11. Machine de fenaison selon la revendication 10,
**caractérisée en ce que**
la distance des axes médians longitudinaux verticaux (14) des rotors râteleurs (9) prévus derrière l'essieu non directeur (8) de la machine, en position de travail et de fonctionnement est inférieure à la distance des axes médians longitudinaux verticaux des rotors râteleurs (11) voisins dans la direction de déplacement (6) et qui se trouvent devant l'essieu directeur (7).
